## Europäisches Patentamt
## European Patent Office
## Office européen des brevets

(19)

(11) Veröffentlichungsnummer: **0 028 417**
**B1**

(12) **EUROPÄISCHE PATENTSCHRIFT**

(45) Veröffentlichungstag der Patentschrift:
**09.11.83**

(21) Anmeldenummer: **80106765.3**

(22) Anmeldetag: **04.11.80**

(51) Int. Cl.³: **B 62 D  55/30**

(54) **Vorrichtung zum Spannen einer Gleiskette.**

(30) Priorität: **06.11.79  DE 2944650**

(43) Veröffentlichungstag der Anmeldung:
**13.05.81 Patentblatt 81/19**

(45) Bekanntmachung des Hinweises auf die Patenterteilung:
**09.11.83 Patentblatt 83/45**

(84) Benannte Vertragsstaaten:
**FR GB IT SE**

(56) Entgegenhaltungen:
**US - A - 2 707 522**
**US - A - 2 774 638**
**US - A - 3 360 063**

(73) Patentinhaber: **Krauss-Maffei Aktiengesellschaft,
Krauss-Maffei-Strasse 2, D-8000 München 50 (DE)**

(72) Erfinder: **Drosen, Erich, Dipl.-Ing.,
Strassbergerstrasse 34, D-8000 München 40 (DE)**
Erfinder: **Kotai, Ferenc, Dipl.-Ing., Francéstrasse 23,
D-8000 München 50 (DE)**

BUNDESDRUCKEREI BERLIN

Vorrichtung zum Spannen einer Gleiskette

Die Erfindung bezieht sich auf eine Gleiskette gemäß Oberbegriff des Hauptanspruchs.

Die Gleisketten von Kettenfahrzeugen erfahren im Betrieb durch die vom Triebrad hervorgerufene Zugkraft eine Dehnung, die insbesondere bei Fahrzeugen, bei denen das Triebrad im Bug angeordnet ist, beträchtliche Ausmaße annehmen kann, da bei dieser Antriebsart ein verhältnismäßig langes Kettenstück (Kettenaufnahmepunkt-Zahneingriff), d. h. ca. 60% der gesamten Kettenumschlingung unter Zugkraft steht.

Diese Dehnung verursacht im vom Triebrad ablaufenden Kettentrum eine Bauchbildung, die sich beim Einfedern der vorderen und/oder hinteren Laufrollen noch verstärkt. Dies kann dazu führen, daß bei Kurvenfahrt auf bestimmten Böden die Kette vom Laufwerk geworfen wird.

Aus der US-PS 3 360 063 ist es bereits bekannt, die im Fahrzeugheck angeordnete Umlenkrolle zwecks Verhinderung einer derartigen Bauchbildung senkrecht zu ihrer Drehachse mittels einer Spannvorrichtung auszulenken, die an einem im Fahrzeugaufbau schwenkbar angeordneten und die Umlenkrolle tragenden Zwischenträger angreift.

Der Nachteil dieser Anordnung besteht jedoch darin, daß sich lediglich die infolge der Einfederung der hinteren Laufrollen ergebende Längung der Gleiskette kompensieren läßt, wohingegen die auf Grund der Zugkraft und der Einfederung der vorderen Laufrollen hervorgerufene Längung nach wie vor eine Bauchbildung zur Folge hat.

Die Aufgabe der Erfindung besteht daher in der Schaffung einer Spannvorrichtung, durch die insbesondere die bei frontgetriebenen Kettenfahrzeugen in Erscheinung tretende Bauchbildung am vom Triebrad ablaufenden Kettentrum zuverlässig verhindert werden kann.

Diese Aufgabe wird durch eine nach dem Kennzeichen des Hauptanspruchs ausgestaltete Spannvorrichtung gelöst. Der bei Leistungseinleitung sich zwischen dem Antriebsritzel und dem Zwischenrad einstellende Rückdruck bewirkt ein Verschwenken des Zwischenträgers mit dem daran gelagerten Triebrad in der Weise, daß ohne Zugkraftübertragung zunächst nur eine Schwenkbewegung erfolgt, bis die überschüssige Kettenlänge verbraucht ist, worauf die Zugkrafteinleitung in die Kette erfolgt. Der besondere Vorteil dieser Anordnung besteht darin, daß sich eine proportional zur eingeleiteten Zugkraft verändernde Kettenspannkraft ergibt, wodurch gewährleistet wird, daß die Kette nur die im jeweiligen Betriebszustand notwendige Kettenspannung erfährt. Bei geringerer Lagerbelastung sind somit größere Zugkräfte zulässig, da keine zusätzliche Verspannung mehr zur Kompensation der Kettendehnung erforderlich ist.

In einer bevorzugten Ausführungsform sind an dem um die Achse des Antriebsritzels schwenkbaren Zwischenträger mehrere Zwischenräder gelagert, die sowohl mit dem Antriebsritzel als auch mit dem Hohlrad in Eingriff stehen. Man kann dadurch die vom Antriebsritzel übertragene Leistung verteilen, mit der Folge, daß der Hohlraddurchmesser verkleinert werden kann. Es lassen sich damit auch die Voraussetzungen schaffen, innerhalb des als Kettentrommel ausgebildeten Triebrades ein Endgetriebe vorzusehen. Um dabei noch einen möglichst großen Verstellweg beim Ausschwenken des Zwischenträgers bzw. der daran gelagerten Kettentrommel zu erhalten, ist es erforderlich, einen möglichst weiten Achsabstand zwischen Zwischenträger-Schwenkachse und der Achse der Kettentrommel zu schaffen. Hierzu ist es zweckmäßig, der der Kettentrommelachse abgewandten Seite der Zwischenträger-Schwenkachse ein Zwischenrad mit kleinem Durchmesser und auf der gegenüberliegenden Seite Zwischenräder mit größerem Durchmesser anzuordnen.

Damit das Triebrad für den Fall, daß es im Bug eines Fahrzeugs gelegen ist, die aus Bodenunebenheiten oder Hindernissen resultierenden Stöße frei aufnehmen kann, kann es zweckmäßig sein, das Triebrad bzw. die Kettentrommel gemäß den Maßnahmen nach Anspruch 8 anzuordnen.

Um die Kette in den Umschlingungsabmessungen einstellen und/oder mit einer Vorspannung versehen zu können, kann der Zwischenträger gemäß Anspruch 9 auf einer Schwinge gelagert werden, wie im Anspruch 10 angegeben.

Zur Vermeidung zu großer Stoßbelastungen und zur Verhinderung unkontrollierter Schwingbewegungen am Zwischenträger kann dieser gemäß den Merkmalen nach Anspruch 11 noch an eine Federungsvorrichtung angelenkt sein.

Weitere Merkmale und Vorteile der Erfindung ergeben sich aus der nachfolgenden Beschreibung von Ausführungsbeispielen anhand der Zeichnung und in Verbindung mit den Ansprüchen. Es zeigt

Fig. 1 die Seitenansicht eines im Bugbereich eines Panzerfahrzeugs gelagerten schwenkbaren Triebrades in schematischer Darstellung,

Fig. 2 die Schnittansicht gemäß der Schnittlinie II-II in Fig. 1,

Fig. 3 die Seitenansicht einer anderen Triebradanordnung in schematischer Darstellung,

Fig. 4 die Schnittansicht gemäß der Schnittlinie IV-IV in Fig. 3,

Fig. 5 die Seitenansicht einer weiteren Triebradanordnung in schematischer Darstellung,

Fig. 6 die Schnittansicht gemäß der Schnittlinie VI-VI in Fig. 5,

Fig. 7 die Seitenansicht einer weiteren Ausführungsform der Lagerung eines im Bugbereich eines Panzerfahrzeugs gelagerten Triebrades in schematischer Darstellung gemäß der Schnittlinie VII-VII in Fig. 8 und

Fig. 8 die Schnittansicht gemäß der Schnittlinie VIII-VIII in Fig. 7.

Im Bugteil 1 eines Kettenfahrzeugs ist das Triebrad 2 angeordnet, über das die Gleiskette 3 mit einem zulaufenden und einem ablaufenden Kettentrum 4 und 5 geführt und getrieben wird. Das Triebrad 2 ist mit einem Zwischenrad 6 über eine gemeinsame Welle 7 verbunden und in einem Zwischenträger 8 gelagert, der seinerseits frei schwenkbar an einem Verlängerungsstück 9 der Welle 10 eines mit dem Zwischenrad 6 in Eingriff stehenden Antriebsritzels 11 angeordnet ist. Das Antriebsritzel ist fahrzeugfest im Bugteil 1 gelagert, von wo aus das Antriebsmoment in die Triebradanordnung eingeleitet wird. Dabei schwenkt bei der dargestellten Drehrichtung der Räder 2, 6 und 11 der Zwischenträger 8 infolge des vom Antriebsritzel 11 und vom Zwischenrad 6 erzeugten Rückdruckes in Richtung des mit unterbrochenen Linien dargestellten Pfeiles S. Der Schwenkradius r ist der Achsabstand zwischen den Achsmittelpunkten von Antriebsritzel 11 und Zwischenrad 6 bzw. Triebrad 2.

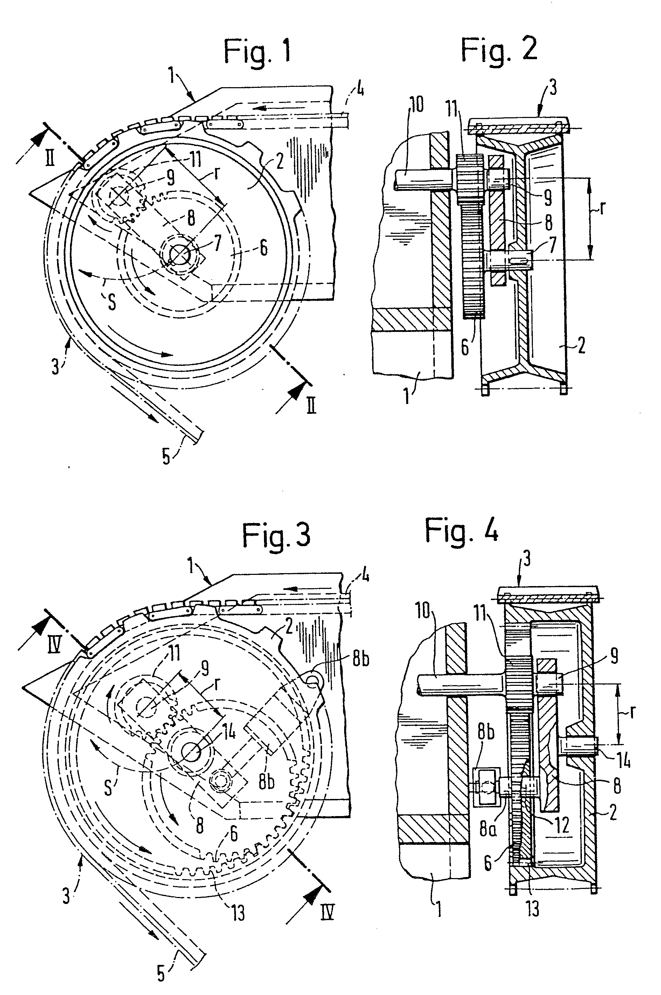

Die Ausführungsform nach den Figuren 3 und 4 zeigt ein am Zwischenträger 8 mittels einer Zwischenradachse 12 gelagertes Zwischenrad 6, das mit einem innenverzahnten, mit dem Triebrad 2 verbundenen Hohlrad 13 in Eingriff steht. Das Triebrad 2 ist an einer, am Zwischenträger 8 befestigten Triebradachse 14 gelagert. Die Verlängerung der am Zwischenträger 8 befestigten Zwischenradachse 12 ist mit 8a bezeichnet. An ihr ist eine am Fahrzeugrahmen fest abgestützte Dämpfungsvorrichtung 8b angelenkt. Eventuell auftretende Schwingungen während des Schwenkvorganges des Zwischenträgers bzw. während des Spannvorgans lassen sich damit dämpfen.

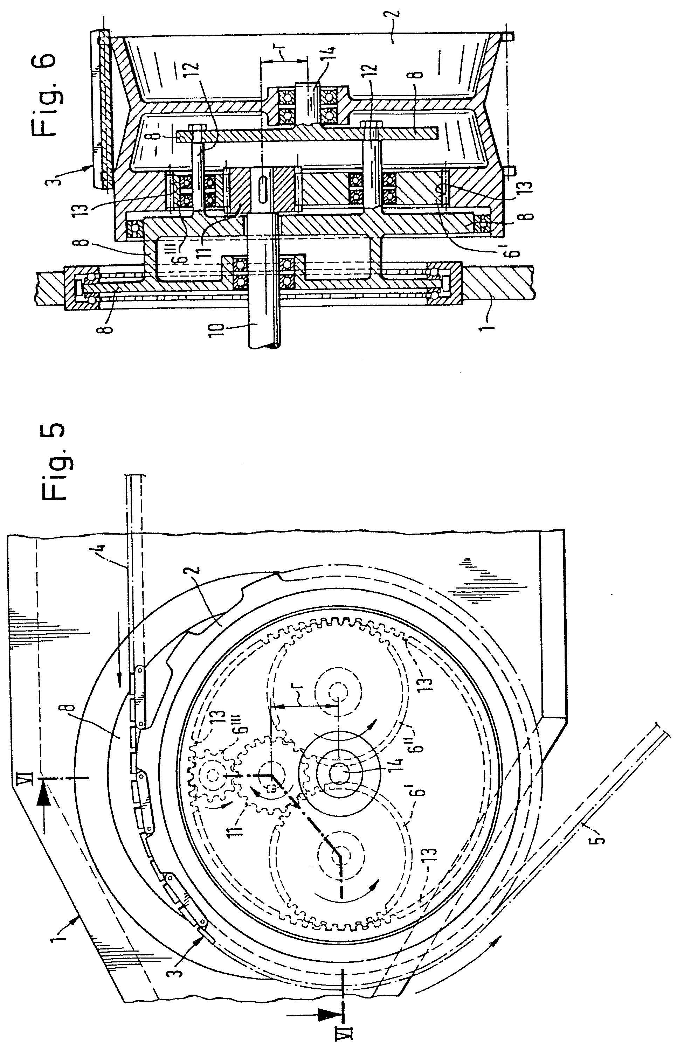

Die Figuren 5 und 6 zeigen eine weitere Triebradanordnung, die im wesentlichen der Ausführungsform nach den Figuren 3 und 4 entspricht, sie weist jedoch in dem vom Hohlrad 13 umschlossenen Raum mehrere Zwischenräder 6', 6'' und 6''' auf. Bei geringem Bauvolumen lassen sich damit große Leistungen übertragen. Dabei weisen zwei der Zwischenräder 6' und 6'' den gleichen Durchmesser auf, der wesentlich größer als der Durchmesser des dritten Zwischenrades 6''' ist. Man erreicht mit dieser konstruktiven Maßnahme, daß die Triebradachse 14 in weitem Abstand von der Schwenkachse des Zwischenträgers 8 bzw. des Antriebsritzels 11 angeordnet werden kann, wobei sämtliche Elemente innerhalb des als Kettentrommel ausgebildeten Triebrades 2 angeordnet sein können. Die Darstellung nach Fig. 6 läßt noch weitere Merkmale erkennen, wie z. B. die Gestaltung des Zwischenträgers 8 zur Aufnahme und Lagerung der Zwischenräder 6', 6'', 6''', des Hohlrades 13 und der Triebradlagerung 14 sowie der Lagerung des Zwischenträgers 8 um die Achse des Antriebsritzels 11.

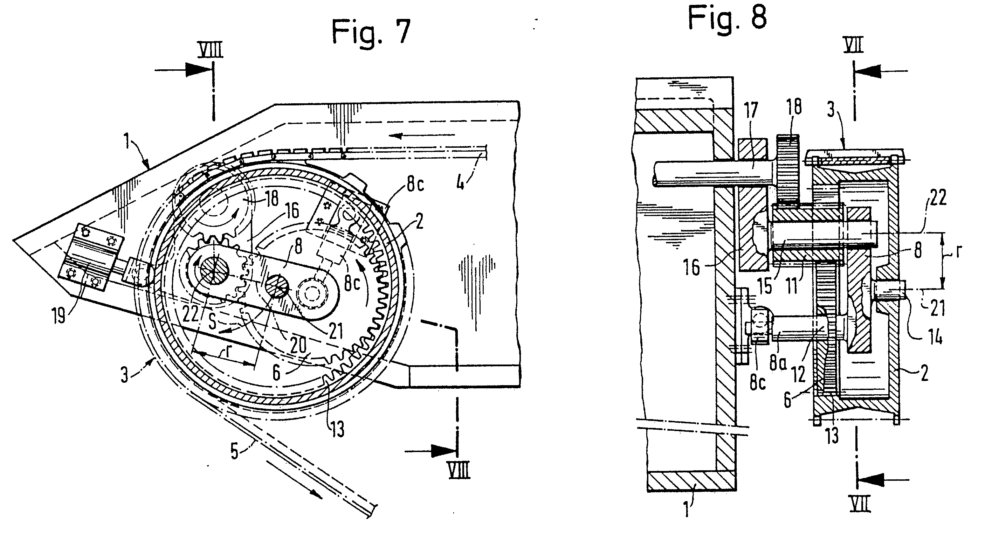

In der Ausführungsform nach den Figuren 7 und 8 ist das Antriebsritzel 11 auf einem Zapfen 15 frei drehbar gelagert, der an einer Schwinge 16 befestigt ist, die ihrerseits um die Welle 17 eines Antriebsrades 18 verschwenkbar ist. Die Schwinge 16 wird mittels einer einstellbaren Spannvorrichtung 19 festgehalten. Der Zwischenträger 8 ist auf dem Zapfen 15 gelagert und so angeordnet, daß eine gedachte Verbindungslinie 20 zwischen dem Lagerungsmittelpunkt 21 des Triebrades 2 und dem Lagerungsmittelpunkt 22 des Zwischenträgers 8 in der Resultierenden oder annähernd in der Resultierenden des auf das Triebrad 2 zulaufenden Kettenstrangs 4 bzw. 5 und des vom Triebrad 2 ablaufenden Kettenstrangs 5 bzw. 4 liegt und daß der Lagerungsmittelpunkt 22 des Zwischenträgers 8 zwischen dem Lagerungsmittelpunkt 21 des Triebrades 2 und dem am Triebrad 2 anliegenden Kettenteil liegt. Stöße auf das Triebrad 2, wie sie insbesondere beim Aufsetzen auf Bodenhindernisse verursacht werden, können durch diese Maßnahme abgefangen werden. Zur Abfederung der Stoßbewegung ist eine Federungsvorrichtung 8c vorgesehen, die an einer Verlängerung 8a der am Zwischenträger 8 befestigten Zwischenradachse 12 angelenkt ist. Der den Spannvorgang verursachende Rückdruck zwischen den Zähnen des Antriebsritzels 11 und dem Zwischenrad 6 wirkt noch unterstützend auf die Federungsvorrichtung 8c, die auch noch mit der Dämpfungsvorrichtung 8b (Fig. 3 und 4) kombiniert werden kann.

**Patentansprüche**

1. Vorrichtung zum Spannen der Gleiskette eines Kettenfahrzeugs, vorzugsweise eines frontgetriebenen Kettenfahrzeugs, mittels einer, an einem im Fahrzeugaufbau schwenkbar angeordneten Zwischenträger (8) angreifenden Spannvorrichtung, durch die ein am Zwischenträger gelagertes Laufwerksrad senkrecht zu seiner Drehachse auslenkbar ist, dadurch gekennzeichnet, daß das Laufwerksrad das Triebrad (2) ist, das mit mindestens einem das Triebrad (2) antreibenden Zwischenrad (6) am Zwischenträger (8) gelagert ist, der seinerseits um die Achse (9, 22) eines fahrzeugfest gelagerten, das Zwischenrad (6) antreibenden Antriebsritzels (11) schwenkbar angeordnet ist.

2. Vorrichtung nach Anspruch 1, dadurch gekennzeichnet, daß das Triebrad (2) und das Zwischenrad (6) über eine gemeinsame, im Zwischenträger (8) gelagerte Welle (7) verbunden sind.

3. Vorrichtung nach Anspruch 1 und 2, dadurch gekennzeichnet, daß zwischen dem Antriebsritzel (11) und dem Zwischenrad (6) zwei oder mehrere Stirnräder angeordnet sind, die am Zwischenrad (6) bzw. am Triebrad (2) eine im Vortriebssinn des Kettenfahrzeugs gerichtete Drehung bewirken.

4. Vorrichtung nach Anspruch 1, dadurch gekennzeichnet, daß das Triebrad (2) ein innenverzahntes Hohlrad (13) aufweist, das mit dem Zwischenrad (6) in Eingriff steht.

5. Vorrichtung nach Anspruch 4, dadurch gekennzeichnet, daß an dem um die Achse des Antriebsritzels (11) schwenkbaren Zwischenträger (8) mehrere Zwischenräder (6', 6'', 6''') gelagert sind, die sowohl mit dem Antriebsritzel (11) als auch mit dem innenverzahnten Hohlrad (13) in Eingriff stehen.

6. Vorrichtung nach Anspruch 5, dadurch gekennzeichnet, daß Zwischenräder (6', 6'', 6''') mit unterschiedlichen Durchmessern vorgesehen sind, wobei auf der der Triebradlagerung abgewandten Seite des Antriebsritzels (11) ein oder mehrere Zwischenräder (6''') mit kleinem Durchmesser angeordnet sind.

7. Vorrichtung nach den Ansprüchen 5 und 6, dadurch gekennzeichnet, daß das Triebrad (2) als Kettentrommel ausgebildet ist, innerhalb derer das Antriebsritzel (11), die Zwischenräder (6, 6', 6'', 6'''), der Zwischenträger (8) und das innenverzahnte Hohlrad (13) angeordnet sind.

8. Vorrichtung nach den Ansprüchen 1 bis 7, dadurch gekennzeichnet, daß an einer Verlängerung (8a) der am Zwischenträger (8) befestigten Zwischenradachse (12) eine am Fahrzeugrahmen fest abgestützte Dämpfungsvorrichtung (8b) angelenkt ist.

9. Vorrichtung nach den Ansprüchen 1 bis 8, dadurch gekennzeichnet, daß eine gedachte Verbindungslinie (20) zwischen dem Lagerungsmittelpunkt (21) des Triebrades (2) und dem Lagerungsmittelpunkt (22) des Zwischenradträgers (8) in der Resultierenden oder annähernd in der Resultierenden des auf das Triebrad (2) zulaufenden Kettenstrangs (4 bzw. 5) und des vom Triebrad ablaufenden Kettenstrangs (4 bzw. 5) liegt und daß der Lagerungsmittelpunkt des Zwischenträgers (8) zwischen dem Lagerungsmittelpunkt des Triebrades (2) und dem am Triebrad (2) anliegenden Kettenteil liegt.

10. Vorrichtung nach Anspruch 9, dadurch gekennzeichnet, daß das Antriebsritzel (11) und der um dessen Achse schwenkbar gelagerte Zwischenträger (8) auf einer Schwinge (16) gelagert sind, in deren Schwenkachse ein mit dem Antriebsritzel (11) in Wirkverbindung stehendes Antriebsrad (18) gelagert ist und an die eine fest oder federnd einstellbare Spannvorrichtung (19) angreift.

11. Vorrichtung nach Anspruch 9, dadurch gekennzeichnet, daß an der Verlängerung (8a) der am Zwischenträger (8) befestigten Zwischenradachse (12) eine am Fahrzeugrahmen fest abgestützte Federungsvorrichtung (8c) angelenkt ist.

## Claims

1. A system for tightening the track of an articulated track vehicle, and more specially of a front drive tracked vehicle, using a tightening system acting on an inbetween support (8) that is rockingly placed in the body of the vehicle, the said tightening system making it possible for an idler wheel, that is bearinged on the inbetween support, to be rocked in a direction normal to its axis of turning, characterized in that the idler wheel is the driving wheel (2), the same being bearinged with at least one inbetween wheel (6) on the inbetween support (8), said inbetween wheel (6) driving said driving wheel (2), said support (8) being supported for turning motion about the axis (9, 22) of a driving pinion (11) that is supported in a bearing fixedly joined to said vehicle, said pinion driving said inbetween wheel (6).

2. The system as claimed in claim 1 characterized in that the driving wheel (2) and the inbetween wheel (6) are joined up by way of a common shaft (7) that is bearinged in the inbetween support (8).

3. The system as claimed in claim 1 and claim 2 characterized in that between the driving pionion (11) and the inbetween wheel (6) there are two or more spur gearwheels, said gearwheels producing a turning effect at the inbetween wheel (6) and the driving wheel (2) in the forward driving direction of the tracked vehicle.

4. The system as claimed in claim 1 characterized in that the driving wheel (2) has an internally toothed gearwheel (13) in mesh with the inbetween wheel (6).

5. The system as claimed in claim 4 characterized in that a number of inbetween wheels (6', 6'' and 6''') are bearinged on the inbetween support (8) that is able to be rocked about said axis of said driving pinion (11), said inbetween wheels (6', 6'' and 6''') being in mesh not only with said driving pinion (11) but furthermore with the internally toothed gearwheel (13).

6. The system as claimed in claim 5 characterized by inbetween wheels (6', 6'' and 6''') with different diameters, one or more inbetween wheels (6''') with a small diameter being positioned on the other side of the driving pinion (11) to the bearing of the driving wheel.

7. The system as claimed in claim 5 and claim 6 characterized in that the driving wheel (2) is in the form of a track drum, within which the driving pinion (11), the inbetween wheels (6, 6', 6'' and 6'''), the inbetween support (8) and the internally toothed gerarwheel (13) are placed.

8. The system as claimed in claims 1 to 7 characterized in that on a tailpiece (8a) of the axle (12) of the inbetween wheel supported on the inbetween support (8) a damper (8b) is turningly fixed in position, said damper (8b) being fixedly joined to the vehicle chassis.

9. The system as claimed in claims 1 to 8 characterized in that an imaginary connection line (20) running between the middle point (21) of the bearing means of the driving wheel (2) and the middle point (22) of the bearing means of the inbetween wheel support (8) is in the resultant, or roughly the resultant, of the run of track (4 or 5) moving towards the driving wheel (2) and of the run of track (4 or 5) coming from the driving wheel and in that the middle point of the bearing means of the inbetween support (8) is placed between the middle point of the bearing means of the driving wheel (2) and the track part running on the driving wheel (2).

10. The system as claimed in claim 9 characterized in that the driving pinion (11) and the inbetween support (8), that is turningly supported on the axle of same, are bearinged on a rocking lever (16), at whose axis of rocking there is bearinged a driving wheel (18) that is drivingly joined up with the driving pinion (11), a tightening system (19) acting on the said lever, said tightening system being fixed in its adjustment or being adjustable.

11. The system as claimed in claim 9 characterized in that a springing suspension means (8c), that is fiexedly supported on the chassis of the vehicle, is rockingly joined up with the tailpiece (8a) of the inbetween wheel axle (12) fixed to the inbetween support (8).

**Revendications**

1. Dispositif pour tendre la chenille de roulement d'un véhicle chenillé, de préférence un véhicule chenillé à traction avant, au moyen d'un dispositif de tension qui est en prise avec un support intermédiaire (8) monté à pivotement sur la superstructure du véhicule, et par l'intermédiaire duquel une roue du train de roulement, montée sur le support intermédiaire, peut être déviée perpendiculairement à son axe de rotation, dispositif caractérisé par le fait que la roue du train de roulement est le barbotin (2) monté, par au moins une roue intermédiaire (6) menant ledit barbotin (2), sur le support intermédiaire (8) qui, à son tour, est monté pivotant autour de l'axe (9, 22) d'un pignon d'entraînement (11) assujetti au véhicule et menant la roue intermédiaire (6).

2. Dispositif selon la revendication 1, caractérisé par le fait que le barbotin (2) et la roue intermédiaire (6) sont reliés au moyen d'un arbre vommun (7) monté dans le support intermédiaire (8).

3. Dispositif selon les revendications 1 et 2, caractérisé par le fait que, entre le pignon d'entraînement (11) et la roue intermédiaire (6), sont interposées deux ou plusieurs roues extrêmes provoquant, sur la roue intermédiaire (6) ou sur le barbotin (2), une rotation dans le sens de l'avance du véhicule chenillé.

4. Dispositif selon la revendication 1, caractérisé par le fait que le barbotin (2) présente une roue creuse (13) à denture interne qui est en prise avec la roue intermédiaire (6).

5. Dispositif selon la revendication 4, caractérisé par le fait que, sur le support intermédiaire (8) pouvant pivoter autour de l'axe du pignon d'entraînement (11), sont montées plusieurs roues intermédiaires (6', 6'', 6''') qui sont en prise aussi bien avec ledit pignon d'entraînement (11) qu'avec la roue creuse (13) à denture interne.

6. Dispositif selon la revendication 5, caractérisé par le fait qu'il est prévu des roues intermédiaires (6', 6'', 6''') de diamètres différents, une ou plusieurs roues intermédiaires (6''') de petit diamètre étant disposées du côté du pignon d'entraînement (11) éloigné de la portée du barbotin.

7. Dispositif selon les revendications 5 et 6, caractérisé par le fait que le barbotin (2) est réalisé sous la forme d'un tambour de chenille à l'intérieur duquel sont logés le pignon d'entraînement (11), les roues intermédiaires (6, 6', 6'', 6'''), le support intermédiaire (8) et la roue creuse (13) à denture interne.

8. Dispositif selon les revendications 1 à 7, caractérisé par le fait qu'un dispositif d'amortissement (8b) en appui rigidement sur le châssis du véhicule est articulé sur un prolongement (8a) de l'axe (12) de la roue intermédiaire fixé au support intermédiaire (8).

9. Dispositif selon les revendications 1 à 8, caractérisé par le fait qu'une ligne imaginaire de jonction (20) entre le point central de portée (21) du barbotin (2) et le point central de portée (22) du support (8) de la roue intermédiaire est située sur la résultante ou approximativement sur la résultante du brin (4 ou 5) de la chenille allant vers le barbotin (2) et du brin (4 ou 5) de la chenille partant du barbotin; et par le fait que le point central de portée du support intermédaire (8) se trouve entre le point central de portée du barbotin (2) et la partie de la chenille reposant sur ce barbotin (2).

10. Dispositif selon la revendication 9, caractérisé par le fait que le pignon d'entraînement (11) et le support intermédiaire (8) monté à pivotement autour de l'axe de ce dernier sont montés sur une biellette oscillante (16) dans l'axe de pivotement de laquelle est placée une roue d'entraînement (18) qui est en liaison efficace avec ledit pignon d'entraînement (11) et qui est en prise avec un dispositif de serrage (19) réglable rigidement ou élastiquement.

11. Dispositif selon la revendication 9, caractérisé par le fait qu'un dispositif de suspension (8c) en appui rigide sur le châssis du véhicule est articulé sur le prolongement (8a) de l'axe (12) de la roue intermédiaire fixé au support intermédiaire (8).

# Fig. 1

# Fig. 2

# Fig. 3

# Fig. 4

Fig. 6

Fig. 5

Fig. 7

Fig. 8

0 028 417